# EUROPEAN PATENT APPLICATION

(11) **EP 4 703 319 A1**
(43) Date of publication of application: **04.03.2026**
(21) Application number: 25198890.3
(22) Date of filing: 29.08.2025
(51) Int. Cl.: B67D 3/04, B67D 1/14

(54) **DISCHARGING MECHANISM OF COLD DRINK DISPENSER**

(30) Priority: 29.08.2024 CN 202422120722 U; 05.09.2024 CN 202422184804 U; 23.01.2025 CN 202520163298 U
(71) Applicant: Guangzhou Xin'an Trading Co., Ltd., Guangzhou Guangdong 510000 (CN)
(72) Inventor: ZHOU, Quan, Guangzhou City, Guangdong Province, 510000 (CN)
(74) Representative: Sun, Yiming

(57) **Abstract**

This application discloses a novel discharging mechanism for a cold drink dispenser, which comprises a discharging tray, a casing, and a handle; the discharging tray is provided with a second discharging outlet, the bottom of the discharging tray is provided with a discharging hood, the discharging hood is provided with a first discharging outlet; the bottom of the handle is provided with a sealing member and a transmission component, the transmission component connects the handle and the sealing member. In this application, effectively avoiding the problem of ice cream or iced drinks splashing everywhere when they are pushed out from the freezing cylinder in traditional cold drink dispensers.

## Description

### TECHNICAL FIELD

This application relates to the technical field of a cold drink dispenser, particularly to a discharging mechanism for a cold drink dispenser.

### BACKGROUND

During the operation of traditional cold drink dispensers, the internal mixing shafts or screws and other mechanical parts exert continuous pressure and shear force on the ice cream or ice slush in the freezing cylinder to generate sufficient power to push it out. However, this mechanical action is often accompanied by intense impact forces, particularly when the ice cream or ice slush is gradually pushed to the outlet, where the impact force peaks. Since the temperature at the outlet is higher than that in the freezing cylinder, the texture of the ice cream or ice slush accumulated at the outlet becomes softer, and the stability of the internal air bubbles decreases. As a result, when discharged, the ice cream or ice slush is more prone to deformation and breakage when subjected to these impacts.

These splashing ice creams or smoothies will not only dirty the surrounding equipment and environment, posing hygiene risks, but also affect the overall quality and safety of ice creams or smoothies.

### SUMMARY

To address the aforementioned shortcomings, this application proposes a discharging mechanism for a cold drink dispenser. The ice cream or smoothie enters the discharging hood through the second discharging port and then exits from the first discharging port at the bottom of the discharging hood, effectively avoiding the issue of ice cream or smoothie splashing everywhere when pushed out from the freezing cylinder in traditional cold drink dispensers.

To achieve this purpose, the following technical solution is adopted in this application.

A discharging mechanism for a cold drink dispenser, comprising a discharging tray, a casing, and a handle; the discharging tray is installed on the casing, the handle is installed on the discharging tray, the discharging tray is provided with a second discharging port, a discharging hood is disposed at the bottom of the discharging tray, the discharging hood is provided with a first discharging port, and the first discharging port is in communication with the second discharging port.

The bottom of the handle is equipped with a sealing member and a transmission component. The transmission component connects the handle and the sealing member, and is used to control the movement of the sealing member. The sealing member is used to control the opening and closing of the second discharging port.

In some embodiments, the discharging hood comprises a U-shaped accommodating portion and a connecting portion. The U-shaped accommodating portion is provided with an accommodating cavity, the top and bottom of which penetrate through the U-shaped accommodating portion. The sidewalls of the U-shaped accommodating portion are fixedly connected to the discharging tray. The discharging tray is provided with a second discharging port, which is in communication with the accommodating cavity.

The first hinge point of the handle is rotatably connected to the top of the U-shaped accommodating portion, and the transmission component is located within the accommodating cavity.

The connecting portion is installed obliquely at the bottom of the U-shaped accommodating portion, and is used to connect the bottoms of the two sidewalls of the U-shaped accommodating portion. The connecting portion and the bottom of the U-shaped accommodating portion jointly form the first discharging port.

In some embodiments, the bottom of the discharging hood is detachably installed with a discharging plate, and the center of the discharging plate is provided with a notch, which forms the first discharging port.

In some embodiments, the shape of the notch can be square, circular, or star-shaped.

In some embodiments, the transmission component comprises a first transmission member and a second transmission member. The first hinge point of the handle is rotatably installed on the top of the U-shaped accommodating portion, and the second hinge point of the handle is rotatably connected to the top of the first transmission member. The bottom of the first transmission member is connected to the top of the rear side of the second transmission member, and the bottom of the second transmission member is fixedly connected to the sealing member.

In the initial state, the direction of the line connecting the first hinge point and the second hinge point is horizontal.

In some embodiments, the transmission component also comprises a return torsion spring, which comprises a winding portion and a transmission portion from top to bottom. The winding portion is wound around the first hinge point of the handle, and the transmission portion is fixedly connected to the front side of the second transmission member.

In some embodiments, the bottom of the second transmission member is provided with a downward-facing sealing slot, which is slidingly connected to the left and right sides of the sealing member;
the sealing member comprises a sealing bracket and a sealing part, the sealing bracket is fixedly connected to the sealing part, and the sealing part is used to block the second discharging port, the sealing part is made of food-grade rubber material;

The second transmission member is provided with a first sealing latching block at the top rear side of the sealing slot, the first sealing latching block and the sealing bracket are latched to each other.

In some embodiments, the first sealing latching block is a hook structure with an upward-tilted end, and the sealing bracket is provided with an elastic protrusion portion and a hook portion. The bottom of the elastic protrusion portion is connected to the sealing bracket, and the top of the elastic protrusion portion is connected to the hook portion. The hook portion is latched with the hook structure.

In some embodiments, the handle is a frustum structure that gradually narrows from bottom to top.

In some embodiments, the top of the U-shaped accommodating portion is provided with a clearance bevel, which inclines downward and away from the discharging tray from top to bottom.

The technical solution of this application can bring about the following beneficial effects:
1. Ice cream or ice smoothies enter the discharging hood through the second discharging port and are then discharged from the first discharging port at the bottom of the discharging hood, effectively avoiding the problem of ice cream splashing everywhere when it is pushed out from the freezing cylinder in traditional ice cream machines.
2. The sealing member, made of food-grade rubber material, ensures that ice cream can be completely retained within the casing when discharge is not required. This avoids material leakage or splashing that may occur with traditional mechanical discharging methods, thereby reducing unnecessary material loss.

### BRIEF DESCRIPTION OF DRAWINGS

Figure 1 is a schematic diagram of the discharging mechanism of one embodiment of the present application;
Figure 2 is an exploded view of the discharging mechanism of one embodiment of the present application;
Figure 3 is an exploded view of the transmission assembly and handle of one embodiment of the present application;
Figure 4 is a schematic diagram of the sealing member of one embodiment of the present application;
Figure 5 is a schematic diagram of the sealing member closing the second discharging port of one embodiment of the present application;
Figure 6 is a schematic diagram of the sealing member opining the second discharging port of one embodiment of the present application.

Reference numerals:
1 - the discharging tray; 2 - the casing; 3 - the handle; 4 - the sealing member; 41 - the sealing bracket42 - the elastic protrusion portion; 43 - the hook portion; 44 - the sealing part; 5 - the transmission assembly; 51 - the first transmission member; 52 - the second transmission member; 521 - the sealing slot; 522 - the first sealing latching block; 56 - the return torsion spring; 6 - the discharging hood; 62 - the U-shaped accommodating portion; 63 - the connecting portion; 64 - the discharging blade; 65 - the clearance bevel.

### DESCRIPTION OF EMBODIMENTS

Below, the technical solution of the present application will be further explained in conjunction with the accompanying drawings and specific embodiments.

In the description of the present application, it should be understood that the terms "length", "center", "upper", "lower", "left", "right", "top", "bottom", and other indications of orientation or positional relationships are based on the orientation or positional relationships shown in the accompanying drawings. These are solely for the purpose of facilitating the description of the present application and simplifying it, and are not intended to indicate or imply that the devices or elements referred to must have a specific orientation, be constructed in a specific orientation, or operate in a specific orientation. Therefore, they should not be construed as limitations on the present application.

Furthermore, the terms "first" and "second" are used solely for descriptive purposes and should not be understood as indicating or implying relative importance or implicitly specifying the number of the indicated technical features. Thus, features qualified by "first" and "second" may explicitly or implicitly comprise one or more of such features.

In the description of the present application, unless otherwise specified, the term "plurality" means more than two. In the description of the present application, it should be noted that, unless otherwise explicitly defined and limited, the terms "installed", "joined", and "connected" should be broadly interpreted. For example, they may refer to fixed connections, detachable connections, or integral connections; direct connections or indirect connections through intermediary media; and internal communication between two elements. For those skilled in the art, the specific meanings of these terms in the context of the present application can be understood based on specific circumstances.

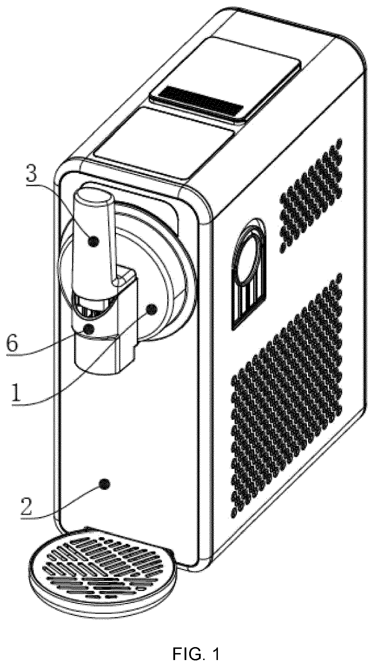

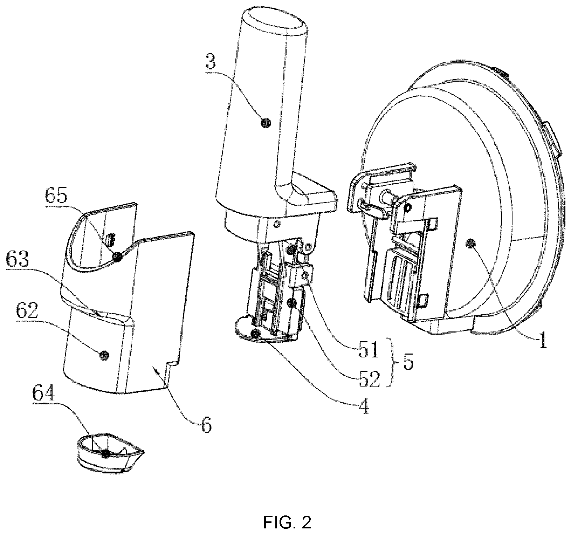

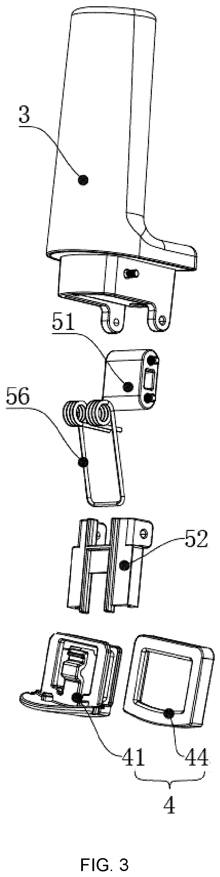

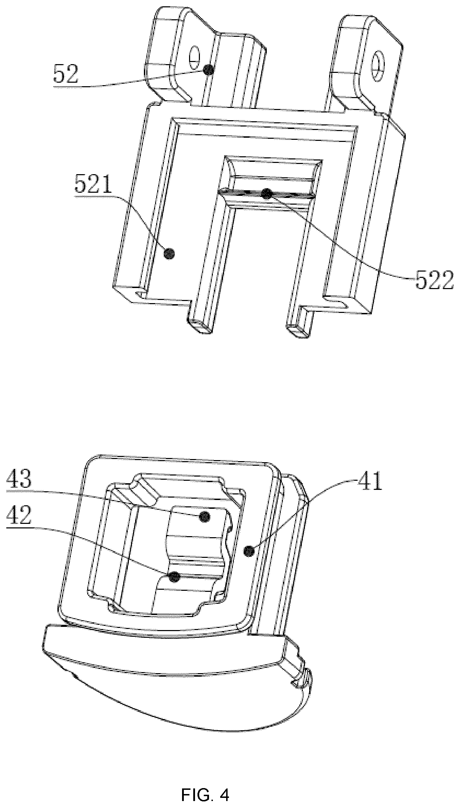

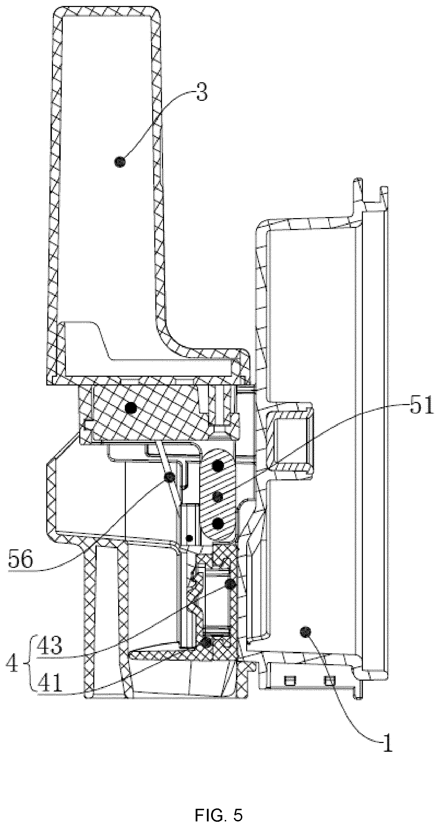

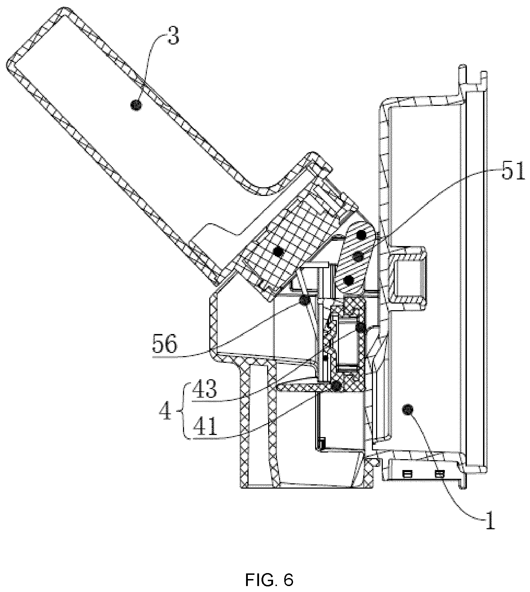

Now, let's describe the discharging mechanism of a cold drink dispenser according to an embodiment of the present application, combining Figures 1 to 6.

The discharging mechanism of the cold drink dispenser comprises a discharging tray 1, a casing 2, and a handle 3. The discharging tray 1 is installed on the casing 2, and the handle 3 is installed on the discharging tray 1. The discharging tray 1 is provided with a second discharging port, and at the bottom of the discharging tray 1, there is a discharging hood 6 with a first discharging port that communicates with the second discharging port.

The bottom of the handle 3 is equipped with a sealing member 4 and a transmission assembly 5. The transmission assembly 5 connects the handle 3 and the sealing member 4, controlling the movement of the sealing member 4, which in turn controls the opening and closing of the second discharging port.

The operational process of the discharging mechanism of the cold drink dispenser according to this embodiment is as follows: Swing the handle 3, which drives the transmission assembly 5 to move. The movement of the transmission assembly 5 can in turn drive the sealing member 4 to open the second discharging port. At this point, ice cream or ice smoothies flow from the second discharging port onto the discharging hood 6 and are then discharged from the first discharging port, thereby completing the discharging of ice cream or ice smoothies.

Through the cooperation of the handle 3, transmission assembly 5, and sealing member 4, precise and rapid opening and closing of the second discharging port are achieved. This not only significantly improves the efficiency of the discharging process but also makes the entire production workflow more flexible, allowing for quick adjustments to the discharging volume based on actual needs and enhancing the discharging efficiency of ice cream or ice smoothies.

It is worth noting that the sealing member 4 is made of food-grade rubber material, ensuring that ice cream or ice smoothies can be fully retained within the casing 2 when discharging is not required. This avoids material leakage or splashing that may occur with traditional mechanical discharging methods, thereby reducing unnecessary material waste.

Moreover, ice cream or ice smoothies enter the discharging hood 6 through the second discharging port and are discharged from the first discharging port at the bottom of the discharging hood 6, effectively preventing the problem of ice cream or ice smoothies splashing everywhere when they are pushed out from the freezing cylinder in traditional cold drink dispensers.

The discharging hood 6 comprises a U-shaped accommodating portion 62 and a connecting portion 63. The U-shaped accommodating portion 62 is provided with an accommodating cavity, the top and bottom of which penetrate through the U-shaped accommodating portion 62. The sidewalls of the U-shaped accommodating portion 62 are fixedly connected to the discharging tray 1, which is provided with a second discharging port communicating with the accommodating cavity.

The first hinging point of the handle 3 is rotatably connected to the top of the U-shaped accommodating portion 62, and the transmission assembly 5 is located within the accommodating cavity.

The connecting portion 63 is installed obliquely at the bottom of the U-shaped accommodating portion 62, connecting the bottoms of the two sidewalls of the U-shaped accommodating portion 62. The connecting portion 63 and the bottom of the U-shaped accommodating portion 62 jointly form the first discharging port.

The first hinging point of the handle 3 rotatably connected to the top of the U-shaped accommodating portion 62 allows the handle 3 to swing flexibly to open or close the second discharging port. Moreover, the transmission assembly 5, located within the accommodating cavity, is effectively protected, reducing interference and damage from the external environment.

The side wall of the U-shaped container part 62 is fixedly connected to the discharge tray 1, forming an enclosed or semi-enclosed space. This effectively prevents ice cream or smoothies from splashing and leaking during the discharging process, reducing their contact with the external environment and ensuring their quality.

Moreover, the connecting portion 63 is installed at the bottom of the U-shaped container part 62 and forms a first discharge outlet together with the bottom of the U-shaped container part 62. This allows ice cream or smoothies to slide down from the connecting portion 63 to the first discharge outlet, further facilitating the smooth discharge of ice cream or smoothies. At the same time, the connecting portion 63 also helps reduce the accumulation and clogging of ice cream or smoothies at the discharge outlet, improving the smoothness and efficiency of discharging.

The bottom of the discharge cover 6 is detachably mounted with a discharge plate 64, and the center of the discharge plate 64 has a notch that forms the first discharge outlet. The shape of the notch can be square, circular, or star-shaped.

It is worth noting that the discharge plate 64 is detachably mounted on the bottom of the discharge cover 6, allowing the cold drink dispenser of this solution to replace the discharge plate 64 at any time according to user needs, thereby enhancing the user experience.

The transmission assembly 5 comprises a first transmission part 51 and a second transmission part 52. The first hinging point of the handle 3 is rotatably installed on the top of the U-shaped accommodating portion 62, while the second hinging point of the handle 3 is rotatably connected to the top of the first transmission part 51. The bottom of the first transmission part 51 is connected to the top of the second transmission part 52, and the bottom of the second transmission part 52 is fixedly connected to the sealing member 4.

In the initial state, the direction of the line connecting the first hinging point and the second hinging point is horizontal.

In this solution, by defining the direction of the line connecting the first hinging point and the second hinging point of the handle 3, it can be effectively ensured that when the handle 3 is swung outwards, it sequentially drives the first transmission part 51 and the second transmission part 52 to move. This causes the bottom of the second transmission part 52 to drive the sealing member 4 to move, allowing the sealing member 4 to open the second discharge outlet so that ice cream or smoothies can be extruded from the second discharge outlet into the first discharge outlet, completing the dispensing of ice cream or smoothies.

When the handle 3 is swung inwards, it sequentially drives the first transmission part 51, the second transmission part 52, and the sealing member 4 to move, causing the sealing member 4 to seal the second discharge outlet, thereby stopping the dispensing of ice cream or smoothies.

The cascaded design of the first transmission part 51 and the second transmission part 52 forms a stable transmission chain. This design not only enhances the stability of the transmission but also makes the movement of the sealing member 4 smoother and more precise during the opening and closing processes.

The transmission assembly 5 also comprises a return torsion spring 56, which comprises a winding section and a transmission section from top to bottom. The winding section is wound around the first hinging point of the handle 3, and the transmission section is fixedly connected to the front side of the second transmission part 52.

When the handle 3 is swung outwards, the rear end of the handle 3 lifts upwards, causing the first transmission part 51 to move upwards, thereby driving the rear side of the second transmission part 52 to move upwards as well. At the same time, the return torsion spring 56 undergoes deformation under the action of the handle 3, and the transmission section drives the front side of the second transmission part 52 to move upwards. At this point, both the front and rear sides of the second transmission part 52 receive upward forces, causing the second transmission part 52 to drive the sealing member 4 to move upwards together, ensuring that the sealing member 4 opens the second discharge outlet.

When the operator releases the handle 3 and it returns to its original position, the return torsion spring 56 resets. The first transmission part 51 moves downwards under the action of the handle 3, causing the second transmission part 52 to move downwards under the action of both the return torsion spring 56 and the first transmission part 51. This, in turn, drives the sealing member 4 to move downwards and close the second discharge outlet.

The bottom of the second transmission part 52 is equipped with a downward-facing sealing slot 521, which slidingly connects with the left and right sides of the sealing member 4. The sealing member 4 comprises a sealing bracket 41 and a sealing part 44, the sealing bracket 41 is fixedly connected to the sealing part 44, and the sealing part 44 is used to block the second discharging port, the sealing part 44 is made of food-grade rubber material.

The second transmission part 52 is provided with a first sealing latching block 522 at the top rear side of the sealing slot 521, the first sealing latching block 522 and the sealing bracket 41 are latched to each other.

Among them, the first sealing latching block 522 is provided on the second transmission part 52, and the sealing bracket 41 is provided on the sealing member 4, allowing the sealing member 4 to be detachably installed on the second transmission part 52. When users need to clean the equipment, they can quickly detach the sealing member 4 by separating the first sealing latching block 522 and the sealing bracket 41, facilitating cleaning and replacement of the sealing member.

The first sealing latching block 522 has a hook structure with an upward-tilted end, and the sealing bracket 41 is provided with an elastic protrusion portion 42 and a hook portion 43. The bottom of the elastic protrusion portion 42 is connected to the sealing member 4, and the top of the elastic protrusion portion 42 is connected to the sealing bracket 41. The hook portion 43 latches with the hook structure.

It is worth noting that pressing the elastic protrusion portion 42 causes it to sink inward, which in turn drives the hook portion 43 to move away from the hook structure. Then, by pulling the sealing member 4 downwards, the sealing member 4 can be quickly detached. When installing the sealing member 4, push it upwards so that the hook portion 43 comes into contact with the hook structure. At this point, press the elastic protrusion portion 42 while continuing to push the sealing member 4 upwards. This will bring the hook portion 43 and the hook structure closer together and latch them, thereby completing the installation of the sealing member 4.

The handle 3 is designed as a frustum of a cone structure that gradually tapers from bottom to top. The frustum shape provides a larger diameter at the lower part of the handle 3, offering a larger support area and enhancing the stability when the user holds the handle 3.

The top of the U-shaped accommodating portion 62 is equipped with an avoidance slope 65, which inclines downwards and away from the discharge tray 1.

During the process of dispensing ice cream or smoothies, the handle 3 needs to be frequently swung outwards to release the material, which may easily collide with the U-shaped accommodating portion 62 and cause damage. Therefore, an avoidance slope 65 is provided at the top of the U-shaped accommodating portion 62, allowing the handle 3 to naturally slide along the slope during the swinging process rather than directly hitting the hard edge of the U-shape. This extends the service life of both the handle 3 and the dispensing cover 6.

The above descriptions, combined with specific embodiments, illustrate the technical principles of the present application. These descriptions are intended solely to explain the principles of the present application and should not be interpreted in any way as limiting the scope of protection. Based on the explanations here, those skilled in the art can readily conceive of other specific embodiments of the present application without requiring inventive effort, all of which will fall within the scope of protection of the present application.

## Claims

1. A discharging mechanism for a cold drink dispenser, comprising a discharging tray, a casing, and a handle; the discharging tray is installed on the casing, the handle is installed on the discharging tray, the discharging tray is provided with a second discharging port, and the bottom of the discharging tray is provided with a discharging shroud which is provided with a first discharging port, and the first discharging port is connected and communicates with the second discharging port;
the bottom of the handle is provided with a sealing member and a transmission assembly, the transmission assembly connects the handle and the sealing member, the transmission assembly is used to control the movement of the sealing member, and the sealing member is used to control the opening and closing of the second discharging port.

2. The discharging mechanism for a cold drink dispenser according to claim 1, wherein the discharging shroud comprises a U-shaped accommodating portion and a connecting portion, the U-shaped accommodating portion is provided with an accommodating cavity, the top and bottom of the accommodating cavity penetrate through the U-shaped accommodating portion, the side wall of the U-shaped accommodating portion is fixedly connected with the discharging tray, the discharging tray is provided with a second discharging port, and the second discharging port communicates with the accommodating cavity;
the first hinging point of the handle is rotatably connected to the top of the U-shaped accommodating portion, and the transmission assembly is located in the accommodating cavity;
the connecting portion is installed at the bottom of the U-shaped accommodating portion, and the connecting portion is used to connect the bottoms of the two side walls of the U-shaped accommodating portion, and the guiding part and the bottom of the U-shaped accommodating portion jointly form the first discharging port.

3. The discharging mechanism for a cold drink dispenser according to claim 2, wherein a dispensing plate is detachably installed at the bottom of the discharging shroud, the center of the dispensing plate is provided with a notch, and the notch forms the first discharging port.

4. The discharging mechanism for a cold drink dispenser according to claim 3, wherein the shape of the notch is square, circular, or star-shaped.

5. The discharging mechanism for a cold drink dispenser according to claim 2, wherein the transmission assembly comprises a first transmission part and a second transmission part, the first hinging point of the handle is rotatably installed on the top of the U-shaped accommodating portion, the second hinging point of the handle is rotatably connected to the top of the first transmission part, the bottom of the first transmission part is connected to the top of the rear side of the second transmission part, and the bottom of the second transmission part is fixedly connected to the sealing member;
in the initial state, the direction of the line connecting the first hinging point and the second hinging point is horizontal.

6. The discharging mechanism for a cold drink dispenser according to claim 5, wherein the transmission assembly further comprises a return torsion spring, which comprises a winding portion and a transmission portion sequentially from top to bottom, the winding portion is wound around the first hinging point of the handle, and the transmission portion is fixedly connected to the front side of the second transmission part.

7. The discharging mechanism for a cold drink dispenser according to claim 6, wherein the bottom of the second transmission part is provided with a downward-facing sealing slide groove, the sealing slide groove is slidably connected to the left and right sides of the sealing member;
the sealing member comprises a sealing bracket and a sealing part, the sealing bracket is fixedly connected to the sealing part, and the sealing part is used to block the second discharging port;
the sealing part is made of food-grade rubber material;
the second transmission part is provided with a first sealing latching block at the top rear side of the sealing slide groove, the first sealing latching block and the sealing bracket are latched to each other.

8. The discharging mechanism for a cold drink dispenser according to claim 7, wherein the first sealing latching block is a hook structure with an upward-tilted end, and the sealing bracket is provided with an elastic protrusion portion and a hook portion, the bottom of the elastic protrusion portion is connected to the sealing bracket, the top of the elastic protrusion portion is connected to the hook portion, and the hook portion is latched with the hook structure.

9. The discharging mechanism for a cold drink dispenser according to claim 1, wherein the handle is a frustum structure that gradually tapers from bottom to top.

10. The discharging mechanism for a cold drink dispenser according to claim 1, wherein the top of the U-shaped accommodating portion is provided with an avoidance slope, which inclines downwards and away from the side of the discharging tray.
